# EUROPEAN PATENT SPECIFICATION

(11) **EP 1 320 847 B1**
(45) Date of publication and mention of the grant of the patent: **02.11.2006**
(21) Application number: 01965487.0
(22) Date of filing: 19.09.2001
(51) Int. Cl.: G10L 13/04

(54) **METHOD AND SYSTEM FOR SYNCHRONIZING AUDIO AND VISUAL PRESENTATION IN A MULTI-MODAL CONTENT RENDERER**
VERFAHREN UND SYSTEM ZUM SYNCHRONISIEREN EINER AUDIOVISUELLEN DARSTELLUNG IN EINEM MULTIMODALEN ANZEIGEGERÄT
PROCEDE ET SYSTEME DESTINES A SYNCHRONISER UNE PRESENTATION AUDIO ET VISUELLE DANS UN RESTITUTEUR DE CONTENU MULTIMODE

(30) Priority: 27.09.2000 US 670800
(43) Date of publication of application: 25.06.2003
(73) Proprietor: International Business Machines Corporation, Armonk, NY 10504 (US)
(72) Inventor: BROCIOUS, Larry, Alpalachin, NY 13732 (US); FEUSTEL, Stephen, Winchester, Hampshire SO21 2JN (GB); HENNESSY, James, Endicott, NY 13760 (US); HOWLAND, Michael, Endicott, NY 13760 (US); PRITKO, Steven, Endicott, NY 13760 (US)
(74) Representative: Moss, Robert Douglas
(86) International application number: PCT/GB2001/004168
(87) International publication number: WO 2002/027710

(56) References cited:
- EP-A- 0 598 597
- WO-A-01/75861
- WO-A-01/80027
- WO-A-97/37344
- PATENT ABSTRACTS OF JAPAN vol. 1995, no. 10, 30 November 1995 (1995-11-30) & JP 07 175909 A (CANON INC), 14 July 1995 (1995-07-14)
- YAMADA A ET AL: "Visual text reader for virtual image communication on networks" IEEE WORKSHOP ON MULTIMEDIA SIGNAL PROCESSING. PROCEEDINGS OF SIGNAL PROCESSING SOCIETY WORKSHOP ON MULTIMEDIA SIGNAL PROCESSING, XX, XX, 23 June 1997 (1997-06-23), pages 495-500, XP002147180

## Description

### Technical Field of the Invention

The present invention generally relates to a multi-modal audio-visual content renderer and, more particularly, to a multi-modal content renderer that simultaneously renders content visually and verbally in a synchronized manner.

### Background of the Invention

In the current art, content renderers (e.g., Web browsers) do not directly synchronize audio and visual presentation of related material and, in most cases, they are exclusive of each other. The presentation of HyperText Markup Language (HTML) encoded content on a standard browser (e.g., Netscape or Internet Explorer) is primarily visual. The rate and method of progression through the presentation is under user control. The user may read the entire content from beginning to end, scrolling as necessary if the rendered content is scrollable (that is, the visual content extends beyond the bounds of the presentation window). The user may also sample or scan the content and read, for example, only the beginning and end. Fundamentally, all of the strategies available for perusing a book, newspaper, or other printed item are available to the user of a standard browser.

Presentation of audio content tends to be much more linear. Normal conversational spoken content progresses from a beginning, through a middle, and to an end; the user has no direct control over this progression. This can be overcome to some degree on recorded media via indexing and fast searching, but the same ease of random access available with printed material is difficult to achieve. Voice controlled browsers are typically concerned with voice control of browser input or various methods of audibly distinguishing an HTML link during audible output. Known prior art browsers are not concerned with general synchronization issues between the audio and visual components.

There are several situations where a person may be interested in simultaneously receiving synchronized audio and visual presentations of particular subject matter. For example, in an automotive setting a driver and/or a passenger might be interfacing with a device. While driving, the driver obviously cannot visually read a screen or monitor on which the information is displayed. The driver could, however, select options pertaining to which information he or she wants the browser to present audibly. The passenger, however, may want to follow along by reading the screen while the audio portion is read aloud.

Also, consider the situation of an illiterate or semi-literate adult. He or she can follow along when the browser is reading the text, and use it to learn how to read and recognize new words. Such a browser may also assist the adult in learning to read by providing adult content, rather than content aimed at a child learning to read. Finally, a visually impaired person who wants to interact with the browser can "see" and find highlighted text, although he or she may not be able to read it.

There are several challenges in the simultaneous presentation of content between the audio and video modes. The chief one is synchronizing the two presentations. For example, a long piece of content may be visually rendered on multiple pages.

A further complication is that the visual presentation and audible presentation may not map one-to-one. Some applications may want some portions of the content to be rendered only visually, without being spoken. Some applications may require content to be spoken, with no visual rendering. Other cases lie somewhere in between. For example, an application may want a person's full name to be read while a nickname is displayed visually.

U.S. Patent 5,884,266 issued to Dvorak, entitled "Audio Interface for Document Based on Information Resource Navigation and Method Therefor", embodies the idea that markup links are presented to the user using audibly distinct sounds, or speech characteristics such as a different voice, to enable the user to distinguish the links from the non-link markup.

U.S. Patent 5,890,123 issued to Brown et al., entitled "System and Method for Voice Controlled Video Screen Display", concerns verbal commands for the manipulation of the browser once content is rendered. This patent primarily focuses on digesting the content as it is displayed, and using this to augment the possible verbal interaction.

U.S. Patent 5,748,186 issued to Raman, entitled "Multimodal Information Presentation System", concerns obtaining information, modeling it in a common intermediate representation, and providing multiple ways, or views, into the data. However, the Raman patent does not disclose how the synchronization is done.

WO-A1-00/21057 discloses a method for providing audible signals in a synchronized manner with highlighted text.

### SUMMARY OF THE INVENTION

It is therefore an object of the present invention to provide a multi-modal renderer that simultaneously renders content visually and verbally in a synchronized manner.

Another object of the invention is to provide a multi-modal renderer that allows content encoded using an extensible Markup Language (XML) based markup tag set to be audibly read to the user.

The present invention as defined by the claims provides a system and method for simultaneously rendering content visually and verbally in a synchronized manner. The invention renders a document both visually and audibly to a user. The desired behavior for the content renderer is that when some section of that content is being heard by the user, that section is visible on the screen and, furthermore, the specific visual content (e.g., the word or phrase) being audibly rendered is highlighted visually. In addition, the invention also reacts to multi-modal input (either tactile input or voice input). The invention also allows an application or server to be accessible to someone via audio instead of visual means by having the renderer handle Embedded Browser Markup Language (EBML) code so that it is audibly read to the user. EBML statements can also be combined so that what is audibly read to the user is related to, but not identical to, the visual text. The present invention also solves the problem of synchronizing audio and visual presentation of changing content via markup language changes rather than by application code changes.

The EBML markup language is a subset of Hypertext Markup Language (HTML), which is a well-known collection of markup tags used primarily in association with the World Wide Web (WWW) portion of the Internet. EBML also integrates several tags from a different tag set, Java Speech Markup Language (JSML). JSML contains tags to control audio rendering. The markup language of the present invention provides tags for synchronizing and coordinating the visual and verbal components of a web page. For example, text appearing between <SILENT> and </SILENT> tags will appear on the screen but not be audibly rendered. Text appearing between <INVISIBLE> and </INVISIBLE> tags will be spoken but not seen. A <SAYAS> tag, adapted from JSML, allows text (or recorded audio such as WAV files, the native digital audio format used in Microsoft Windows^{®} operating system) that differs from the visually rendered content to be spoken (or played).

The method for synchronizing an audio and visual presentation in the multi-modal browser includes the steps of receiving a document via a computer network, parsing the text in the document, providing an audible component associated with the text, and simultaneously transmitting to output the text and the audible components.

A preferred embodiment of the present invention provides a method and system such that when some section of that content is being heard by the user, that section is visible on the screen and, furthermore, the specific visual content (e.g., the word or phrase) being audibly rendered is somehow highlighted visually. This implies automatic scrolling as the audio presentation progresses, as well as word-to-word highlighting.

### BRIEF DESCRIPTION OF THE DRAWINGS

The foregoing and other objects, aspects and advantages will be better understood from the following detailed description of a preferred embodiment of the invention with reference to the drawings, in which:
Figure 1 is a logical flow diagram illustrating the method of the present invention;
Figure 2 is an example of a rendered page with a touchable component;
Figure 3 is a block diagram of a system on which the present invention may be implemented;
Figure 4A is a diagram of an example of a model tree;
Figure 4B is a diagram showing a general representation of the relationship between a model tree and audio and visual views;
Figure 5 shows an example of a parse tree generated during view building;
Figure 6 shown an example of a view/model interrelationship; and
Figure 7 shows an example of an adjusted view/model interrelationship after unnecessary nodes have been discarded.

### DETAILED DESCRIPTION OF A PREFERRED EMBODIMENT OF THE INVENTION

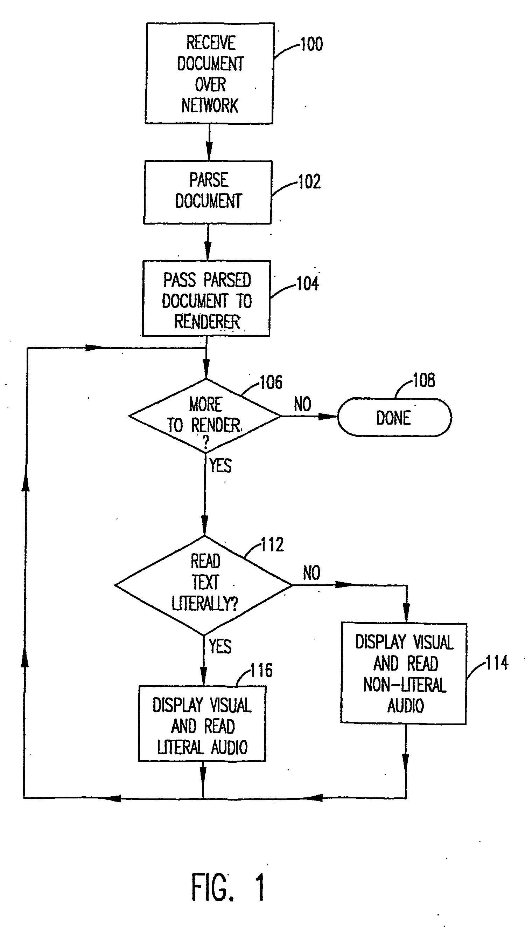

Referring now to the drawings, and more particularly to Figure 1, there is shown a logical flow diagram illustrating the method of the present invention. A document is input, or received over a computer network, in function block 100. In function block 102, the document is parsed to separate the text from the EBML tags. In function block 104, the parsed document is passed to the EBML renderer. A test is then made in decision block 106 to determine if there is more of the document to render. If not, the process terminates at 108; otherwise, a test is made in decision block 112 to determine whether to read the text of the subdocument literally. If not, the visual component is displayed, and an audio portion is read that does not literally correspond to the visual component in function block 114. If the determination in decision block 112 is that the text is to be read literally, the visual component is displayed, and an audio portion is read that literally corresponds to the visual component in function block 116. After either of the operations of function blocks 114 and 116 are performed, the process loops back to decision block 106 until a determination is made that there is no more rendering to be done.

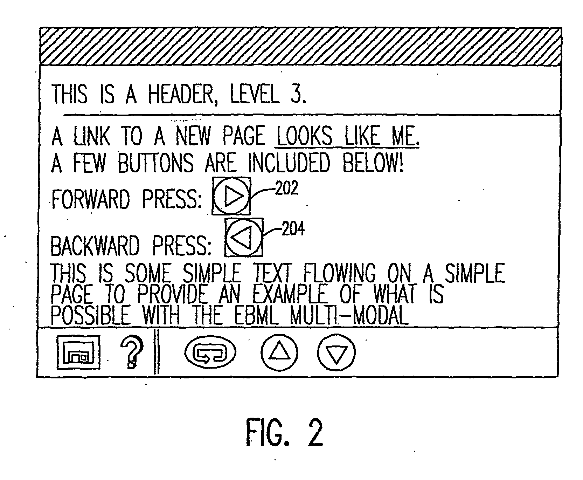

Figure 2 is an example of a rendered page with a touchable component. A user can visually read the text on this page as it is being read aloud. As each word is being audibly read to the user, it is also highlighted, which makes it quicker and easier to identify and touch what has just been read (or near to what was just read). Additionally, buttons 202 and 204 are displayed that makes it easy for the reader to advance to the next screen or return to a previous screen, respectively. By generating its EBML correctly, the application can read all articles in order, but skip the current article if, for example, button 202 on the screen is pushed. A driver of an automobile, for example, can thus visually focus on the road, hear the topic/title of an article and quickly find the advance button 202 on the touch screen if the article is not of interest. In a preferred embodiment, the browser audibly prompts the user to advance to the next screen by saying, for example, "to skip this article press the advance to next screen button". Additionally, the button can be made to stand out from the rest of the screen, such as by flashing and/or by using a color that makes the button readily apparent. The ease with which a user can press button 202 to skip the current article or button 204 to return to a previous article is comparable to the ease of turning on the radio or selecting another radio channel.

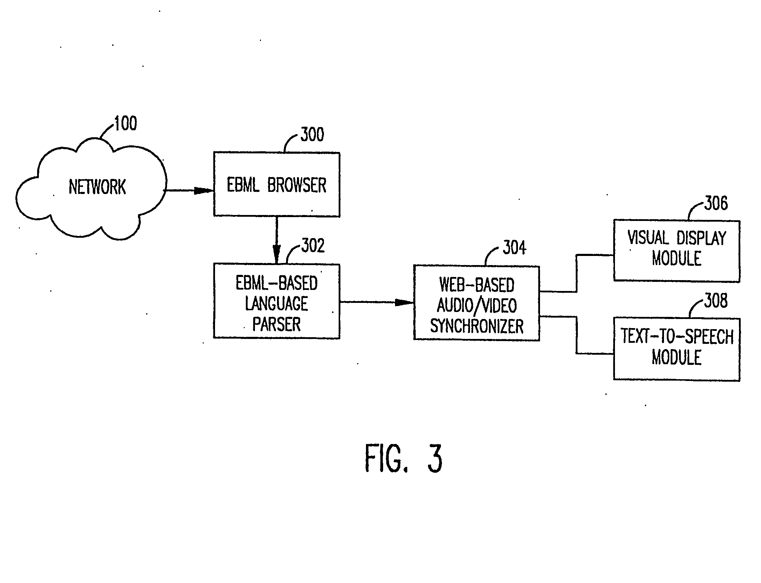

Figure 3 is a block diagram of the system on which the present invention may be implemented. The EBML browser 300 receives EBML- embedded content from a network 100. The browser 300 passes the content to an EBML language parser 302, which parses the EBML language of the received content. The parser 302 then provides the content to be rendered to the audio-video synchronizer 304, which synchronizes the output of each of the audio and video portions of the original EBML. The display module 306 and the text to speech (TTS) module 308 both receive output from the audio-video synchronizer 304. TTS module 308 prepares the audio portion of the EBML page that is to be read, and display module 306 displays the visual portion so that it is synchronized with the audio portion from TTS module 308.

In a preferred embodiment of the present invention, there are three stages between parsing of the EBML and completion of rendering which enable and execute the synchronized aural and visual rendering of the content: a) building of the model; b) construction of the views of the model; and c) rendering.

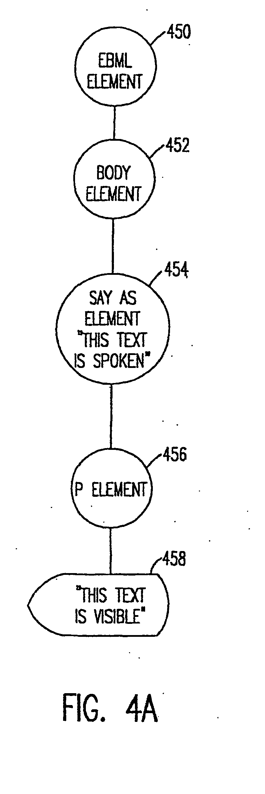

Turning now to building the model stage of the present invention that synchronizes the audio and visual components, when the markup language is parsed by parser 302, a model tree is built that contains model elements for each tag in the markup language. Elements for nested tags appear beneath their parent elements in the model tree. For example, the following code 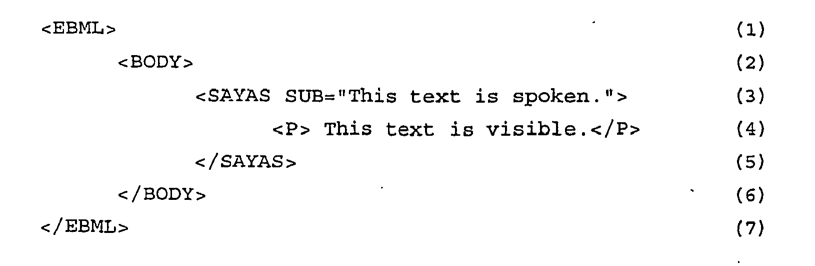 would result in the model tree shown in Figure 4A. Specifically, the *PElement* 456 (for paragraph) appears below *SayasElement* 454. The *SayasElement,* 454 in turn, appears below the *BodyElement.* 452. Finally, the *BodyElement* 452 is a child of the *EBMLElement* 450. The text itself (e.g., "This text is visible") is contained in a special text element 458 at the bottom of the tree.

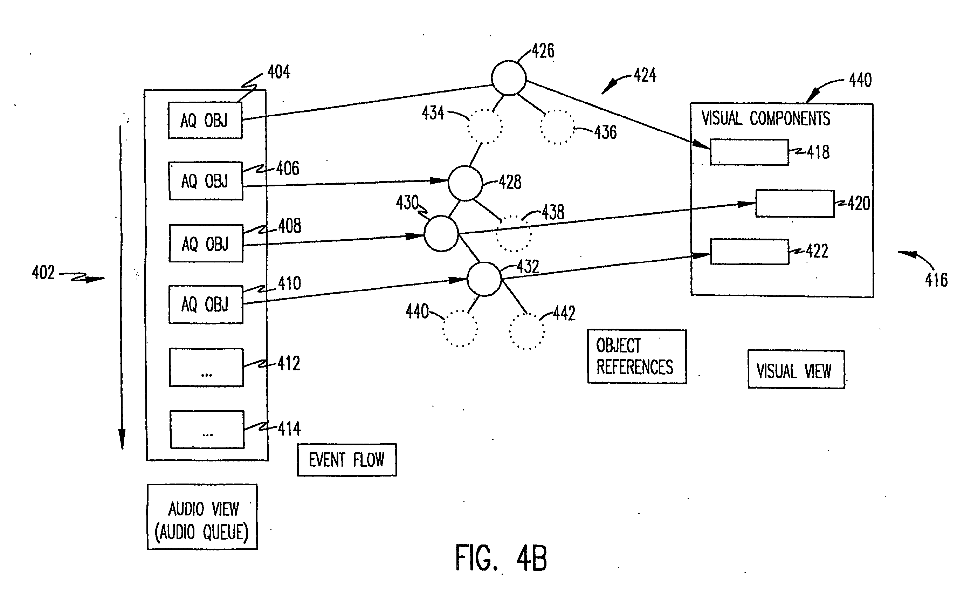

Turning now to the constructing the views stage of the invention, as shown in Figure 4B, once the model tree 424 is built in accordance with the source code provided, it is traversed to create separate audio 402 and visual 416 views of the model. The audio view 402 contains a queue of audio elements (404, 406, 408, 410, 412 and 414), which are objects representing either items to be spoken by, say, a text-to-speech voice engine 304 or by some media player, or items which enable control of the audio flow (e.g., branching in the audio queue, pausing, etc.). The visual view 416 contains a representation of the content usable by some windowing system 440 for visual rendering of components (418, 420, 422).

As each element (426, 434, 428, 430, 432, 440, 442, 438, 436) in the model tree 424 is traversed, it is instructed to build its visual 416 and audio 402 views. The visual or aural rendering of text within a given tag differs depending on where that tag appears in the model tree 424. In general, elements obtain their visual and aural attributes from their parent element in the model tree 424. Traversal of the model tree 424 guarantees that parent elements are processed before their children, and ensures, for example, that any elements nested inside a <SILENT> tag, no matter how deep, get a silent attribute. Traversal is a technique widely known to those skilled in the art and needs no further explanation.

The current element then modifies the attributes to reflect its own behavior thus effecting any nodes that fall below it in the tree. For example, a *SilentElement* sets the audible attribute to false. Any nodes falling below the <SILENT> node in the tree (that is, they were contained within the <SILENT> EBML construct) adopt an audio attribute that is consistent with those established by their ancestors. An element may also alter the views. For example, in a preferred embodiment, a *SayasElement,* like SilentElement, will set the audible attribute to false since something else is going to be spoken instead of any contained text. Additionally, however, it will introduce an object or objects on the audio view 402 to speak the substituted content contained in the tag attributes SUB= "This text is spoken.").

Finally, contained tags and text (i.e., child elements) are processed. A node is considered a parent to any nodes that fall below it in the tree 424. Thus, for example, nodes 434 and 436 of model tree 424 are child nodes of node 426, and node 426 is a parent node of nodes 434 and 436. In addition to a node being responsible for the generation of an Audio Output element (404, 406, 408, 410, 412 and 414 in Figure 4B) they also have to generate a visual presence (418, 420 and 422 in Figure 4B).

For contained tag elements (e.g., 434 and 436), they are simply asked to build their own views (i.e., the tree traversal continues). For contained text elements, the text is processed in accordance with all of the accumulated attributes. So, for example, if the attributes indicate audible but not visual content, the audio view 402 is modified but nothing is added to the visual view 416. In a preferred embodiment, most of the information on how to process the text is accumulated in the text attributes, so most elements do not need to handle processing their own contained text. Rather, they search up the model tree 424 for an element that has a method for processing the text. Only those elements that are later involved in keeping the visual and audible presentations synchronized have methods for processing the text (e.g., element 432). These elements, like *SayAsElement,* provide the link between the spoken content and the visual content. They register themselves to objects on the audio queue 402 so they receive notification when words or audio clips are spoken or played, and they maintain references to the corresponding visual view components. Therefore, it is only elements that have unique behavior relative to speaking and highlighting that need to have their own methods for processing the text. A *SayAsElement,* for example, must manage the fact that one block of text must be highlighted while a completely different audio content is being rendered, either by a TTS synthesizer or a pre-recorded audio clip. Most elements that have no such special behavior to manage and that do not appear in the tree under other elements with special behavior end up using the default text processing provided by the single root *EBMLElement,* which centralizes normal word-by-word highlighting.

Since only select elements are used within the model tree 424 to maintain the link between the audio and visual views, they need to persist beyond the phase of constructing the views and into the phase of rendering the content. One advantage of this method of constructing the views is that all other elements in the tree (typically the vast majority) are no longer needed during the rendering phase and can be deleted. Those expendable elements (434, 436, 438, 440, 442) are drawn in Figure 4B with dashed lines. This benefit can result in dramatic storage savings. A typical page of markup can result in hundreds of tag and text nodes being built. After the audio and visual views have been built, a small handful of these nodes may remain to process speech events (and maintain synchronization between the views) during the view presentation.

During the rendering of the content, the renderer iterates through the audio view 402. The audio view 402 now consists of a series of objects that specify and control the audio progression including:
· objects containing text to be spoken;
· objects marking the entry/exit to elements;
· objects requesting an interruptible pause to the audio presentation; and
· objects requesting a repositioning of the audio view 402 (including the ability to loop back and repeat part of the audio queue).
As events are processed, the appropriate retained element (426, 428, 430, 432) in the model tree 424 is notified. The model tree 424, in turn, tells the corresponding visual components (428, 420, 422) the appropriate highlighting behavior and asks them to make themselves visible (i.e., asks them to tell their containing window to autoscroll as necessary).

To further understand the steps required to build/render a document, consider the following simple EBML document:

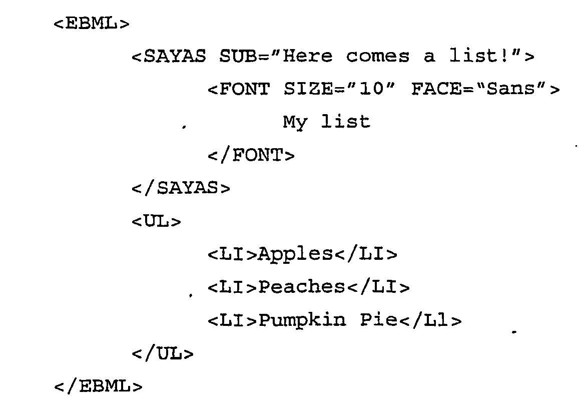

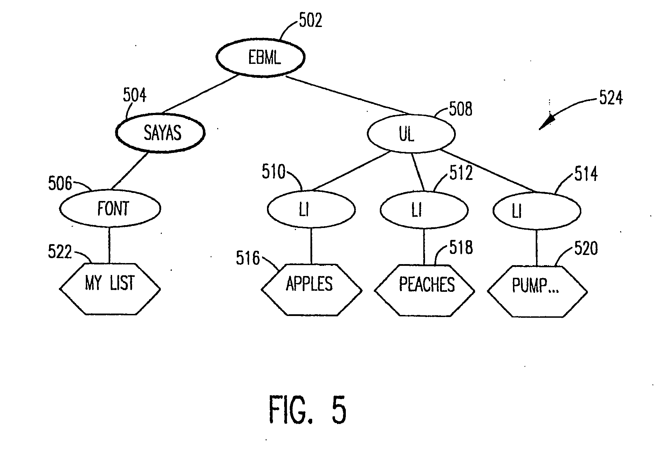

The parser 302 creates the model tree depicted in Figure 5. The <EBML> 502 and <SAYAS> 504 nodes are indicated using a bold oval as these nodes are designed to handle text for those in their descendant tree (there are other tags in this category, but these are the two tags that happened to be in this example). It is these two nodes that do the actual addition of text to the audio/visual views. Non text nodes (506, 508, 510, 512, 514) are represented with the ovals containing the tag names. The browser uses this model tree 524 during the construction of the audio and visual views. Note that terminal nodes (516, 518, 520, 522) are indicated with a polygon. These nodes contain the actual text from the document. Nodes falling below in the tree just pass the build request up the tree without regard as to which node will handle the request.

After the parsing of the document is complete, the browser traverses the model tree 524 and begins the construction of the various required views. As the build routine in each node is reached it can do several things. First, the current text attribute object can be altered, which will affect the presentation of text by those below it in the tree. For example, if a <FONT> tag is reached, the <FONT> tag node alters the text attribute object to indicate that subsequent visual view build requests should use a particular font for any contained text. Those nodes below honor this attribute because each obtains its parents copy of the attribute object before beginning work. Second, the build routine can call up the model tree 524 to its ancestors and ask that a particular segment of text be handled. This is the default behavior for text nodes. Finally, the build routine can directly affect the view. For example, the <P> tag node can push a newline object onto the current visual view, thus causing the visual flow of text to be interrupted. Likewise, the <BREAK> tag can push an audio break object onto the audio queue, thus causing a brief pause in the audio output.

As nodes call up the ancestral tree asking for text to be handled, the nodes that implement this function (<EBML> and <SAYAS> in this example) are responsible for building the audio/visual views and coordinating any synchronization that is required during the presentation.

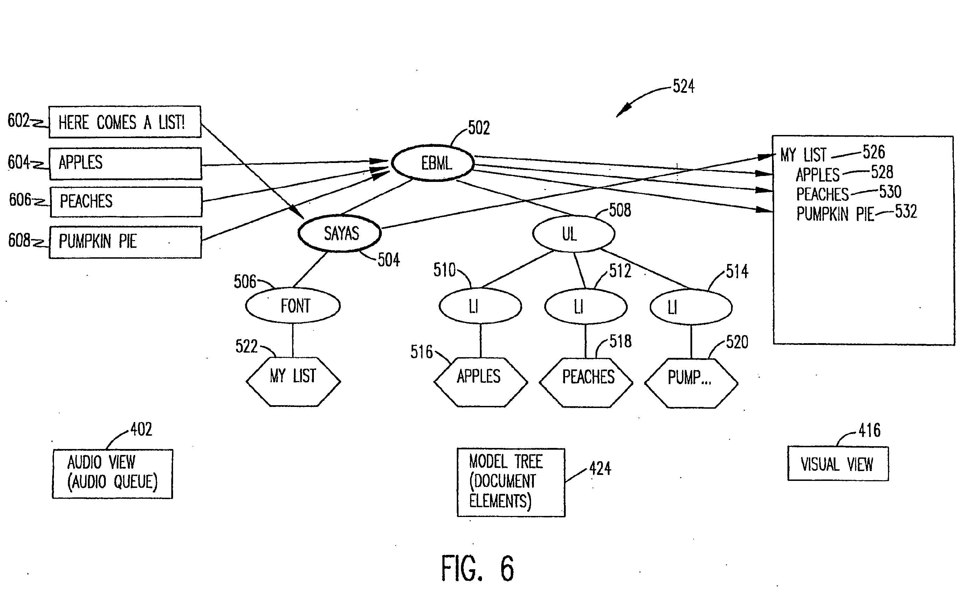

Figure 6 illustrates the relationships between the views and the model for the example EBML after the build has completed. As the audio queue 402 is built, references are maintained to the nodes responsible for the synchronization of the audio/visual views. For example, Audio view 402 item 602 points to the SAYAS tag 504, and audio queue item 604, 606 and 608 point to the EBML tag 502. This allows events issued by the speech engine 304 to be channeled to the correct node. The model, in turn, maintains references to the appropriate components in the visual presentation. This allows the model nodes to implement any synchronizing behavior required as the text is being presented aurally. In this example, the <SAYAS> node 504 takes care of synchronizing the different audio and visual presentation of items 602 and 526. The <EBML> 502 node provides the default behavior where the audio and visual presentations are the same, as shown by elements 604, 606, 608, and elements, 528, 530 and 532, respectively.

Once the views have been built, the model is instructed to dissolve any references held within the tree. For example, the Java Programming Language allows "garbage collection" in the Java Virtual Machine to collect nodes that are not needed to provide synchronization during the presentation. Other "garbage collection" systems can be used to automatically reclaim nodes. Those nodes that are required for synchronization are anchored by the audio view 402 and thus avoid being collected.

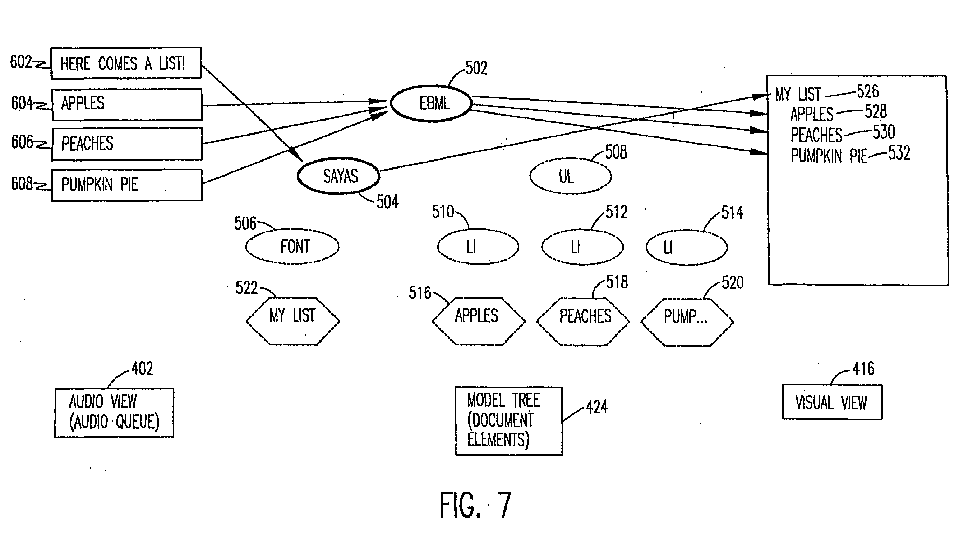

Figure 7 shows the tree with the references dissolved. The nodes available to be garbage collected are shown with dashed lines (506, 508, 510, 512, 514, 516, 518, 520 and 522).

## Claims

1. A computer implemented method for synchronizing an audio and visual presentation in a multi-modal renderer, comprising the steps of:
receiving a document which includes browser markup language code including tags for audio components and tags for visual components;
parsing text in the received document to build a model tree (424) containing model elements for each tag in said code;
traversing the model tree (424) to build visual (416) and audio (402) views;
generating an audible component associated with the text based on an audio view item pointing to a tag for an audio component; and
displaying the text based on a video view item pointing to a tag for a visual component while reproducing the generated audible component.

2. The computer implemented method for synchronizing an audio and visual presentation in a multi-modal renderer as recited in claim 1, further comprising the step of visually highlighting portions of the displayed text corresponding to the reproduced generated audible component.

3. The computer implemented method as recited in claim 2, further comprising the step of autoscrolling the displayed text to maintain a correspondence between the displayed text and the reproduced generated audible component.

4. The computer implemented method as recited in any preceding claim, wherein the audible component literally corresponds to the text.

5. The computer implemented method as recited in any one of claims 1 to 3, wherein the audible component is related to, but does not literally correspond to the text.

6. The computer implemented method as recited in any preceding claim, wherein the audible component is a pre-recorded clip.

7. The computer implemented method as recited in any preceding claim, wherein the document is received from a network.

8. The computer implemented as recited in claim 7, wherein the multi-modal renderer is a network browser.

9. The computer implemented method as recited in any preceding claim, further comprising the step of displaying buttons which, when pressed by a user, advance displayed text to skip a current article or return to a previous article.

10. The computer implemented method as recited in claim 9, further comprising the step of highlighting the displayed buttons to facilitate selection by a user.

11. A computer system for synchronizing an audio and visual presentation in a multi-modal renderer, comprising:
an input device for receiving a document which includes browser markup language code including tags for audio components and tags for visual components;
a parser for parsing text in the received document to build a model tree (424) containing model elements for each tag in said code;
means for traversing the model tree (424) to build visual (416) and audio (402) views;
means for generating an audible component associated with the text based on an audio view item pointing to a tag for an audio component; and
a display for displaying the text based on a video view item pointing to a tag for a visual component while the generated audible component is reproduced.

12. The computer system as recited in claim 11, wherein the display includes means for highlighting portions of the displayed text corresponding to the reproduced generated audible component.

13. The computer system as recited in claim 11, including means for autoscrolling of the displayed text to coincide with the audio component, whereby the text corresponding to the reproduced generated audible component is kept in view.

14. The computer system as recited in anyone of claims 11 to 13, wherein the audible component literally corresponds to the displayed text.

15. The computer system as recited in anyone of claims 11 to 13, wherein the audible component is related to, but does not literally correspond to the displayed text.

16. The computer system as recited in anyone of claims 11 to 15, wherein the audible component is a pre-recorded clip.

17. The computer system as recited in anyone of claims 11 to 16, including means for receiving the document from a network.

18. The computer system as recited in claim 17, wherein the multi-modal renderer is a browser.

19. The computer system as recited in anyone of claims 11 to 18, wherein said display, in operation, is arranged to display buttons which, when pressed by a user, advance displayed text to skip a current article or return to a previous article.

20. The computer system as recited in claim 19, wherein the displayed buttons are highlighted to facilitate selection by a user.

21. A computer program product comprising computer program code which, when executed, controls a computer to synchronize audio and visual components within a content renderer, the computer program product comprising:
first computer program code for parsing text in a document which includes browser markup language code, including tags for audio components and tags for visual components, said first computer program code building a model tree (424) containing model elements for each tag in said browser markup language code and traversing the model tree (424) to build visual (416) and audio (402) views;
second computer program code for generating an audible component associated with the text based on an audio view item developed by said traversing said model tree (424) pointing to a tag for an audio component; and
third computer program code for displaying the text based on a video view item developed by said traversing said model tree (424) pointing to a tag for a visual component while the generated audible component is reproduced.

22. The computer program as recited in claim 21, further comprising fourth computer program code for visually highlighting portions of the displayed text corresponding to the reproduced generated audible component.

23. The computer program according to claim 22, further comprising fifth computer program code for determining when the audible component literally corresponds to the text.

24. The computer program according to claim 22, further comprising sixth computer program code for determining when the audible component is related to, but does not literally correspond to the text.

25. The computer program as recited in claim 24, further comprising seventh computer program code for autoscrolling displayed text to coincide with the reproduced generated audio component.

## Patentansprüche

1. Von einem Rechner ausgeführtes Verfahren zur Synchronisierung einer Audiopräsentation und einer Bildpräsentation in einer Wiedergabeeinheit mit mehreren Betriebsarten, wobei das Verfahren die folgenden Schritte umfasst:
Empfangen eines Dokuments, das einen Browser-Auszeichnungssprachencode enthält, der Markierungszeichen für Audiokomponenten und Markierungszeichen für Bildkomponenten enthält;
Auswerten von Text in dem empfangenen Dokument, um einen Modellbaum (424) aufzubauen, der Modellelemente für jedes Markierungszeichen in dem Code enthält;
Durchlaufen des Modellbaums (424), um Bildansichten (416) und Audioansichten (402) aufzubauen;
auf der Grundlage eines Elements einer Audioansicht, das auf ein Markierungszeichen für eine Audiokomponente zeigt, Erzeugen einer akustischen Komponente, die zu dem Text gehört; und
Anzeigen des Texts auf der Grundlage eines Elements einer Videoansicht, das auf ein Markierungszeichen für eine Bildkomponente zeigt, während die erzeugte akustische Komponente nachgebildet wird.

2. Von einem Rechner ausgeführtes Verfahren zur Synchronisierung einer Audio- und einer Bildpräsentation in einer Wiedergabeeinheit mit mehreren Betriebsarten nach Anspruch 1, wobei das Verfahren des Weiteren den Schritt der sichtbaren Hervorhebung von Teilen des angezeigten Texts umfasst, die der nachgebildeten erzeugten akustischen Komponente entsprechen.

3. Von einem Rechner ausgeführtes Verfahren nach Anspruch 2, das des Weiteren den Schritt der Durchführung eines automatischen Bildlaufs in dem angezeigten Text umfasst, um zwischen dem angezeigten Text und der nachgebildeten erzeugten akustischen Komponente eine Zuordnung aufrechtzuerhalten.

4. Von einem Rechner ausgeführtes Verfahren nach einem der vorhergehenden Ansprüche, wobei die akustische Komponente dem Text wörtlich entspricht.

5. Von einem Rechner ausgeführtes Verfahren nach einem der Ansprüche 1 bis 3, wobei sich die akustische Komponente auf den Text bezieht, diesem aber nicht wörtlich entspricht.

6. Von einem Rechner ausgeführtes Verfahren nach einem der vorhergehenden Ansprüche, wobei die akustische Komponente ein vorab aufgezeichneter Clip ist.

7. Von einem Rechner ausgeführtes Verfahren nach einem der vorhergehenden Ansprüche, wobei das Dokument von einem Netzwerk empfangen wird.

8. Von einem Rechner ausgeführtes Verfahren nach Anspruch 7, wobei die Wiedergabeeinheit mit mehreren Betriebsarten ein Netzwerk-Browser ist.

9. Von einem Rechner ausgeführtes Verfahren nach einem der vorhergehenden Ansprüche, das des Weiteren den Schritt der Anzeige von Schaltflächen umfasst, die, wenn sie von einem Benutzer angeklickt werden, angezeigten Text weiterschalten, um einen aktuellen Artikel zu überspringen, oder zu einem vorherigen Artikel zurückkehren.

10. Von einem Rechner ausgeführtes Verfahren nach Anspruch 9, das des Weiteren den Schritt der Hervorhebung der angezeigten Schaltflächen umfasst, um die Auswahl durch einen Benutzer zu vereinfachen.

11. Rechnersystem zur Synchronisierung einer Audio- und einer Bildpräsentation in einer Wiedergabeeinheit mit mehreren Betriebsarten, wobei das Verfahren Folgendes umfasst:
eine Eingabeeinheit zum Empfangen eines Dokuments, das Browser-Auszeichnungssprachencode enthält, der Markierungszeichen für Audiokomponenten und Markierungszeichen für Bildkomponenten enthält;
eine Auswerteeinheit zum Auswerten von Text in dem empfangenen Dokument, um einen Modellbaum (424) aufzubauen, der Modellelemente für jedes Markierungszeichen in dem Code enthält;
ein Mittel, das dazu dient, den Modellbaum (424) zu durchlaufen, um Bildansichten (416) und Audioansichten (402) aufzubauen;
ein Mittel, das dazu dient, auf der Grundlage eines Elements einer Audioansicht, das auf ein Markierungszeichen für eine Audiokomponente zeigt, eine akustische Komponente zu erzeugen, die zu dem Text gehört; und
einen Bildschirm, um den Text auf der Grundlage eines Elements einer Videoansicht, das auf ein Markierungszeichen für eine Bildkomponente zeigt, anzuzeigen, während die erzeugte akustische Komponente nachgebildet wird.

12. Rechnersystem nach Anspruch 11, wobei der Bildschirm ein Mittel enthält, um Teile des angezeigten Texts hervorzuheben, die der nachgebildeten erzeugten akustischen Komponente entsprechen.

13. Rechnersystem nach Anspruch 11, das ein Mittel enthält, um in dem angezeigten Text einen automatischen Bildlauf so durchzuführen, dass er mit der Audiokomponente übereinstimmt, wobei der Text, der der nachgebildeten erzeugten akustischen Komponente entspricht, im Bild bleibt.

14. Rechnersystem nach einem der Ansprüche 11 bis 13, wobei die akustische Komponente dem angezeigten Text wörtlich entspricht.

15. Rechnersystem nach einem der Ansprüche 11 bis 13, wobei sich die akustische Komponente auf den Text bezieht, diesem aber nicht wörtlich entspricht.

16. Rechnersystem nach einem der Ansprüche 11 bis 15, wobei die akustische Komponente ein vorab aufgezeichneter Clip ist.

17. Rechnersystem nach einem der Ansprüche 11 bis 16, das ein Mittel enthält, um das Dokument von einem Netzwerk zu empfangen.

18. Rechnersystem nach Anspruch 17, wobei die Wiedergabeeinheit mit mehreren Betriebsarten ein Browser ist.

19. Rechnersystem nach einem der Ansprüche 11 bis 18, wobei der Bildschirm im Betrieb so ausgelegt ist, dass er Schaltflächen anzeigt, die, wenn sie von einem Benutzer angeklickt werden, angezeigten Text weiterschalten, um einen aktuellen Artikel zu überspringen, oder zu einem vorherigen Artikel zurückkehren.

20. Rechnersystem nach Anspruch 19, wobei die angezeigten Schaltflächen hervorgehoben werden, um die Auswahl durch einen Benutzer zu vereinfachen.

21. Rechnerprogrammprodukt, das Rechnerprogramm-Code umfasst, der, wenn er ausgeführt wird, einen Rechner so steuert, dass dieser Audio- und Bildkomponenten in einer Inhaltwiedergabeeinheit synchronisiert, wobei das Rechnerprogrammprodukt Folgendes umfasst:
einen ersten Rechnerprogramm-Code zur Auswertung von Text in einem Dokument, das Browser-Auszeichnungssprachencode enthält, welcher Markierungszeichen für Audiokomponenten und Markierungszeichen für Bildkomponenten enthält, wobei der erste Rechnerprogrammcode einen Modellbaum (424) aufbaut, der Modellelemente für jedes Markierungszeichen in dem Browser-Auszeichnungssprachencode enthält, und den Modellbaum (424) durchläuft, um Bildansichten (416) und Audioansichten (402) aufzubauen;
einen zweiten Rechnerprogramm-Code, um eine zu dem Text gehörende akustische Komponente auf der Grundlage eines Elements einer Audioansicht zu erzeugen, das gebildet wird, indem der Modellbaum (424) durchlaufen wird, und das auf ein Markierungszeichen für eine Audiokomponente zeigt; und
einen dritten Rechnerprogramm-Code, um den Text auf der Grundlage eines Elements einer Videoansicht anzuzeigen, das gebildet wird, indem der Modellbaum (424) durchlaufen wird, und das auf ein Markierungszeichen für eine Bildkomponente zeigt, während die erzeugte akustische Komponente nachgebildet wird.

22. Rechnerprogramm nach Anspruch 21, das des Weiteren einen vierten Rechnerprogramm-Code umfasst, um Teile des angezeigten Texts sichtbar hervorzuheben, die der nachgebildeten erzeugten akustischen Komponente entsprechen.

23. Rechnerprogramm nach Anspruch 22, das des Weiteren einen fünften Rechnerprogramm-Code umfasst, um festzustellen, wenn die akustische Komponente dem Text wörtlich entspricht.

24. Rechnerprogramm nach Anspruch 22, das des Weiteren einen sechsten Rechnerprogramm-Code umfasst, um festzustellen, wenn die akustische Komponente auf dem Text bezieht, diesem aber nicht wörtlich entspricht.

25. Rechnerprogramm nach Ansrpuch 24, das des Weiteren einen siebten Rechnerprogramm-Code umfasst automatischen Bildlaufs in dem angezeigten Text umfasst, um zwischen dem angezeigten Text und der nachgebildeten erzeugten akustischen Komponente eine Zuordnung aufrechtzuerhalten.

## Revendications

1. Un procédé mis en oeuvre sur ordinateur, pour synchroniser une présentation audio et visuelle dans un organe de restitution multi-mode, comprenant les étapes consistant à :
recevoir un document, qui comprend un code de langage de marquage pour navigateur, comprenant des étiquettes pour des composants audio et des étiquettes pour des composants visuels ;
analyser le texte dans le document reçu, pour construire un arbre modèle (424), contenant des organes de modèle pour chaque étiquette dans ledit code ;
traverser l'arbre modèle (424) pour construire des vues visuelles (416) et audio (402) ;
générer un composant audible associé au texte, basé sur une vue audio, en pointant à une étiquette pour un composant audio ; et
afficher le texte d'après un organe de vue audio, pointant à une étiquette pour un composant visuel, tout en reproduisant le composant audible généré.

2. Le procédé mis en oeuvre sur un ordinateur pour synchroniser une présentation audio et visuelle dans un organe de restitution multi-mode, tel que décrit à la revendication 1, comprenant en outre l'étape mise en évidence visuelle de parties du texte affiché, correspondant au composant audible généré reproduit.

3. Le procédé mis en oeuvre sur un ordinateur tel qu'indiqué à la revendication 2, comprenant en outre l'étape de déroulement automatique de texte affiché, afin de maintenir une correspondance entre le texte affiché et le composant audible reproduit.

4. Le procédé mis en oeuvre sur un ordinateur tel qu'indiqué à l'une des revendications précédentes, dans lequel le composant audible correspond littéralement au texte.

5. Le procédé mis en oeuvre sur un ordinateur tel que décrit dans les revendications 1 à 3, dans lequel le composant audible est lié au texte, mais ne lui correspond pas littéralement.

6. Le procédé mis en oeuvre sur un ordinateur tel qu'indiqué à l'une quelconque des revendications précédentes, dans lequel le composant audible est un clip pré-enregistré.

7. Le procédé mis en oeuvre sur un ordinateur tel qu'indiqué à l'une quelconque des revendications précédentes, dans lequel le document est reçu depuis un réseau.

8. Le procédé mis en oeuvre sur un ordinateur tel qu'indiqué à la revendication 7, dans lequel l'organe de restitution multi-mode est un navigateur sur réseau.

9. Le procédé mis en oeuvre sur un ordinateur tel qu'indiqué à la revendication précédente, comprenant en outre l'étape d'affichage de boutons, qui, une fois pressés par un utilisateur, font avancer le texte affiché pour sauter un article actuel, ou revenir à un article antérieur.

10. Le procédé mis en oeuvre sur un ordinateur tel qu'indiqué à la revendication 9, comprenant en outre l'étape de mise en évidence de boutons affichés, afin de faciliter la sélection par un utilisateur.

11. Un système d'ordinateur pour synchroniser une présentation visuelle et audio dans un organe de restitution multi-mode, comprenant :
un dispositif d'entrée, pour recevoir un document qui contient un code de marquage pour navigateur, incluant des étiquettes pour des composants audio et des étiquettes pour des composants visuels,
un analyseur, pour analyser du texte dans le document reçu, pour construire un arbre modèle (424) contenant des organes modèle pour chaque étiquette dans ledit code,
des moyens, pour traverser l'arbre modèle (424) pour construire des vues visuelles (407) et audio (402) ;
des moyens, pour générer un composant audible associé au texte, basé sur un organe de vue audio, en pointant à une étiquette pour un composant audio ; et
un affichage pour afficher le texte d'après un organe de vue audio, en pointant à une étiquette pour un composant visuel, tandis que le composant audible généré est reproduit.

12. Le système d'ordinateur tel qu'indiqué dans la revendication 11, dans lequel l'affichage comprend des moyens pour mettre en évidence des parties du texte affiché, correspondant au composant audible généré reproduit.

13. Le système d'ordinateur selon la revendication 11, comprenant des moyens pour effectuer un déroulement automatique du texte affiché pour coïncider avec le composant audio, de manière que le texte correspondant au composant audible généré reproduit soit maintenu en vue.

14. Le système d'ordinateur tel qu'indiqué à l'une quelconque des revendications 11 à 13, dans lequel le composant audible correspond littéralement au texte affiché.

15. Le système d'ordinateur tel qu'indiqué à l'une quelconque des revendications 11 à 13, dans lequel le composant audible est lié au texte affiché, mais ne lui correspond pas littéralement.

16. Le système d'ordinateur tel qu'indiqué à l'une quelconque des revendications 11 à 15, dans lequel le composant audible est un clip pré-enregistré.

17. Le système d'ordinateur tel qu'indiqué à l'une quelconque des revendications 11 à 16, comprenant des moyens pour recevoir le document depuis un réseau.

18. Le système d'ordinateur tel qu'indiqué à la revendication 17, dans lequel l'organe de restitution multi-mode est un navigateur.

19. Le système d'ordinateur tel qu'indiqué à l'une quelconque des revendications 11 à 18, dans lequel ledit affichage, en fonctionnement, est agencé pour afficher des boutons, qui, lorsqu'ils sont pressés par un utilisateur, font avancer le texte affiché pour sauter un article actuel ou revenir à un article antérieur.

20. Le système d'ordinateur tel qu'indiqué à la revendication 19, dans lequel les boutons affichés sont mis en évidence pour faciliter la sélection par un utilisateur.

21. Un produit de programme pour ordinateur, comprenant un code de programme pour ordinateur, qui, une fois exécuté, commande un ordinateur pour synchroniser des composants audio et visuels dans un organe de restitution de contenu, le produit de programme pour ordinateur comprenant :
un premier code de programme pour ordinateur, pour analyser du texte dans un document, qui comprend un code de langage de marquage pour navigateur, comprenant des étiquettes pour des composants audio et des étiquettes pour des composants visuels, ledit premier code de programme pour ordinateur construisant un arbre modèle (414) contenant des organes de modèle pour chaque étiquette dans ledit code de langage de marquage pour navigateur et traversant l'arbre modèle (424) pour construire des vues visuelles (416) et audio (402) ;
un deuxième code de programme pour ordinateur, pour générer un composant audible associé au texte d'après un organe de vue audio développé par ladite traversée dudit arbre modèle (424), pointant à une étiquette pour un composant audio ; et
un troisième code de programme pour ordinateur, pour afficher le texte d'après un organe de vue vidéo développé par ladite traversée dudit arbre modèle (424) en pointant à une étiquette pour un composant visuel, tandis que le composant audible généré est reproduit.

22. Le programme pour ordinateur tel qu'indiqué à la revendication 21, comprenant en outre un quatrième programme pour ordinateur, pour mettre en évidence visuellement des parties du texte affiché correspondant au composant audible généré reproduit.

23. Le programme pour ordinateur selon la revendication 22, comprenant en outre un cinquième code de programme pour ordinateur, pour déterminer le moment auquel le composant audible correspond littéralement avec le texte.

24. Le programme pour ordinateur selon la revendication 22, comprenant en outre un sixième code de programme pour ordinateur, pour déterminer le moment auquel le composant audible est lié au texte, mais ne lui correspond pas littéralement.

25. Le programme pour ordinateur tel qu'indiqué à la revendication 24, comprenant en outre un septième code de programme pour ordinateur, pour effectuer le déroulement automatique du texte affiché, afin de coïncider avec le composant audio généré reproduit.
